# EUROPEAN PATENT APPLICATION

(11) **EP 4 561 170 A1**
(43) Date of publication of application: **28.05.2025**
(21) Application number: 23842095.4
(22) Date of filing: 30.06.2023
(51) Int. Cl.: H04W 36/00

(54) **CHO CONFIGURATION UPDATING METHOD AND NETWORK SIDE DEVICE**

(30) Priority: 18.07.2022 CN 202210841905
(71) Applicant: Vivo Mobile Communication Co., Ltd., Dongguan, Guangdong 523863 (CN)
(72) Inventor: SONG, Erhao, Dongguan, Guangdong 523863 (CN)
(74) Representative: Michalski Hüttermann & Partner Patentanwälte mbB
(86) International application number: PCT/CN2023/105124
(87) International publication number: WO 2024/017030

(57) **Abstract**

Embodiments of this application disclose a CHO configuration update method and a network-side device, and pertain to the field of communication technologies. The CHO configuration update method according to an embodiment of this application includes: receiving, by an S-MN, first signaling from a T-MN; where the first signaling is used to indicate that a configuration of a CPAC candidate cell is changed, the S-MN is a serving node for a primary cell of a terminal before a conditional handover, and the T-MN is a serving node for a CHO candidate cell configured with a CPAC candidate cell for the terminal; and reconfiguring, by the S-MN, CHO with CPAC for the terminal based on the first signaling.

## Description

### CROSS-REFERENCE TO RELATED APPLICATIONS

This application claims priority to Chinese Patent Application No.202210841905.6 filed on July 18, 2022, which is incorporated herein by reference in its entirety.

### TECHNICAL FIELD

This application pertains to the field of communication technologies, and particularly relates to a conditional handover (Conditional Handover, CHO) configuration update method and a network-side device.

### BACKGROUND

Dual connectivity (Dual Connectivity, DC) refers to that a network (NetWork, NW) provides a terminal with resources of two network nodes/base stations (access network elements), one network node as a master node (Master Node, MN) and the other as a secondary node (Secondary Node, SN). The MN controls a master cell group (Master Cell Group, MCG), whereas the SN controls a secondary cell group (Secondary Cell Group, SCG).

Conditional primary secondary cell addition or change (Conditional PSCell Addition or Change, CPAC) includes at least one of the following: conditional PSCell addition (Conditional PSCell Addition, CPA) and conditional PSCell change (Conditional PSCell Change, CPC). CPA is a PSCell addition executed by a terminal when execution conditions are found satisfied through evaluation, and CPC is a PSCell change executed by a terminal when execution conditions are found satisfied through evaluation.

During the process of a CHO with CPAC (CHO with CPAC), the configuration of a CPAC candidate cell corresponding to a target master node (TargetMaster Node, T-MN) may change, which will affect evaluation performance of the terminal on CPAC candidate cells.

### SUMMARY

Embodiments of this application provide a CHO configuration update method and a network-side device, so as to solve the problem that evaluation performance of a terminal on a CPAC candidate cells is affected due to configuration change of the CPAC candidate cell.

According to a first aspect, a CHO configuration update method is provided. The method includes: receiving, by an S-MN, first signaling from a T-MN; where the first signaling is used to indicate that a configuration of a CPAC candidate cell is changed, the S-MN is a serving node in which a PCell of a terminal is located before a conditional handover, and the T-MN is a serving node in which a CHO candidate cell configured with a CPAC candidate cell for the terminal is located; and reconfiguring, by the S-MN, CHO with CPAC for the terminal based on the first signaling.

According to a second aspect, a CHO configuration update method is provided. The method includes: sending, by a T-MN, first signaling to an S-MN; where the first signaling is used to indicate that a configuration of a CPAC candidate cell is changed, the S-MN is a serving node in which a PCell of a terminal is located before a conditional handover, and the T-MN is a serving node in which a CHO candidate cell configured with a CPAC candidate cell for the terminal is located.

According to a third aspect, a CHO configuration update apparatus is provided. The apparatus is applied to an S-MN and includes: a receiving module, configured to receive first signaling from a T-MN; where the first signaling is used to indicate that a configuration of a CPAC candidate cell is changed, the S-MN is a serving node in which a PCell of a terminal is located before a conditional handover, and the T-MN is a serving node in which a CHO candidate cell configured with a CPAC candidate cell for the terminal is located; and a sending module, configured to reconfigure CHO with CPAC for the terminal based on the first signaling.

According to a fourth aspect, a CHO configuration update apparatus is provided. The apparatus is applied to a T-MN and includes a sending module configured to send first signaling to an S-MN; where the first signaling is used to indicate that a configuration of a CPAC candidate cell is changed, the S-MN is a serving node in which a PCell of a terminal is located before a conditional handover, and the T-MN is a serving node in which a CHO candidate cell configured with a CPAC candidate cell for the terminal is located.

According to a fifth aspect, a network-side device is provided. The network-side device includes a processor and a memory, where a program or instructions capable of running on the processor are stored in the memory. When the program or instructions are executed by the processor, the steps of the method according to the first aspect or second aspect are implemented.

According to a sixth aspect, a network-side device is provided, including a processor and a communication interface. The communication interface is configured to: receive first signaling from a T-MN; where the first signaling is used to indicate that a configuration of a CPAC candidate cell is changed, the S-MN is a serving node in which a PCell of a terminal is located before a conditional handover, and the T-MN is a serving node in which a CHO candidate cell configured with a CPAC candidate cell for the terminal is located; and reconfigure CHO with CPAC for the terminal based on the first signaling. Alternatively, the communication interface is configured to send first signaling to an S-MN; where the first signaling is used to indicate that a configuration of a CPAC candidate cell is changed, the S-MN is a serving node in which a PCell of a terminal is located before a conditional handover, and the T-MN is a serving node in which a CHO candidate cell configured with a CPAC candidate cell for the terminal is located.

According to a seventh aspect, a readable storage medium is provided. A program or instructions are stored in the readable storage medium. When the program or instructions are executed by a processor, the steps of the method according to the first aspect or the steps of the method according to the second aspect are implemented.

According to an eighth aspect, a chip is provided. The chip includes a processor and a communication interface, where the communication interface is coupled to the processor, and the processor is configured to run a program or instructions to implement the steps of the method according to the first aspect or the steps of the method according to the second aspect.

According to a ninth aspect, a computer program/program product is provided. The computer program/program product is stored in a storage medium, and the computer program/program product is executed by at least one processor to implement the steps of the method according to the first aspect or the steps of the method according to the second aspect.

In the embodiments of this application, in a case that CHO with CPAC is configured for the terminal, if the configuration of the CPAC candidate cell is changed, the S-MN can acquire the configuration change of the CPAC candidate cell through the first signaling, and reconfigure CHO with CPAC for the terminal based on the first signaling. This prevents the terminal from evaluating a CPAC candidate cell whose resources have been released, thereby improving the evaluation performance of the terminal on CPAC candidate cells and improving the performance of a communication system.

### BRIEF DESCRIPTION OF DRAWINGS

FIG. 1 is a schematic diagram of a wireless communication system according to an embodiment of this application;
FIG. 2 is a schematic flowchart of a CHO configuration update method according to an embodiment of this application;
FIG. 3 is a schematic flowchart of a CHO configuration update method according to an embodiment of this application;
FIG. 4 is a schematic structural diagram of a CHO configuration update apparatus according to an embodiment of this application;
FIG. 5 is a schematic structural diagram of a CHO configuration update apparatus according to an embodiment of this application;
FIG. 6 is a schematic structural diagram of a communication device according to an embodiment of this application; and
FIG. 7 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that the technologies described in the embodiments of this application are not limited to long term evolution (Long Term Evolution, LTE)/LTE-Advanced (LTE-Advanced, LTE-A) systems, and may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6^{th} generation (6^{th} Generation, 6G) communication system.

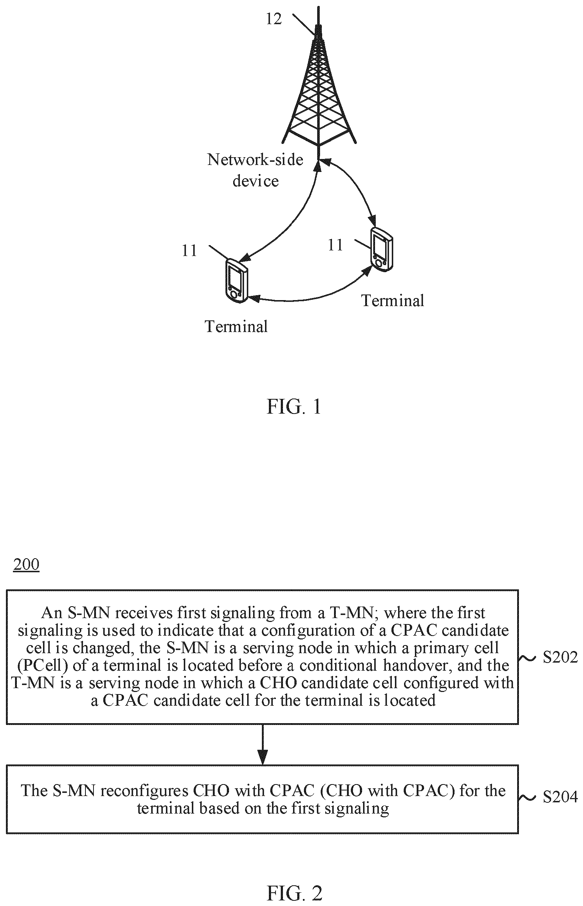

FIG. 1 is a block diagram of a wireless communication system to which embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), or pedestrian user equipment (Pedestrian User Equipment, PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, smart earphones, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a Wi-Fi (Wireless Fidelity, WiFi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following describes in detail the CHO configuration update method and apparatus provided in the embodiments of this application by using some embodiments and application scenarios thereof with reference to the accompanying drawings.

In a case that CHO with CPAC (CHO with CPAC) is configured for a terminal, if a configuration of a CPAC candidate cell is changed, a target master node (T-MN) cannot inform a source master node (S-MN) of the CPAC configuration change content through existing Xn interface signaling. To solve this technical problem, as shown in FIG. 2, an embodiment of this application provides a CHO configuration update method 200. The method may be executed by an S-MN. In other words, the method may be executed by software or hardware installed on the S-MN. The method includes the following steps.

S202. An S-MN receives first signaling from a T-MN; where the first signaling is used to indicate that a configuration of a CPAC candidate cell is changed, the S-MN is a serving node in which a primary cell (PCell) of a terminal is located before a conditional handover, and the T-MN is a serving node in which a CHO candidate cell configured with a CPAC candidate cell for the terminal is located.

In this embodiment, the configuration change of the CPAC candidate cell may include addition, modification, or release of a CPAC candidate cell.

In this embodiment, in a case that the configuration of the CPAC candidate cell is changed, the T-MN may send the first signaling to the S-MN to indicate that the configuration of the CPAC candidate cell is changed. In this embodiment of this application, the T-MN is allowed to inform the S-MN of the configuration change of the CPAC candidate cell.

In one example of this embodiment, a new Xn signaling flow can be introduced, so that the T-MN informs the S-MN of configuration change content of the CHO or CPAC candidate cell through the new first signaling.

In another example, the first signaling is conditional handover cancel (Conditional Handover Cancel) signaling. In this embodiment, a new information element (Information Element, IE) is added to the conditional handover cancel signaling so that the T-MN informs the S-MN of configuration change content of the CPAC candidate cell.

In yet another example, the first signaling is conditional handover cancellation signaling. In this embodiment, a new cause (Cause) value is added to the conditional handover cancel signaling to indicate that the configuration of the CPAC candidate cell is changed and further instruct the S-MN to re-prepare the CHO candidate cell.

S204. The S-MN reconfigures CHO with CPAC (CHO with CPAC) for the terminal based on the first signaling.

In this embodiment, the S-MN may send a radio resource control (Radio Resource Control, RRC) reconfiguration message to the terminal based on content of the first signaling. The RRC reconfiguration message is used to instruct the terminal to add or modify a candidate PCell or indicate the addition, modification, or release of a candidate PSCell associated with the candidate PCell.

In the CHO configuration update method provided in this embodiment of this application, in a case that CHO with CPAC is configured for the terminal, if the configuration of the CPAC candidate cell is changed, the S-MN can acquire the configuration change of the CPAC candidate cell through the first signaling, and reconfigure CHO with CPAC for the terminal based on the first signaling. This prevents the terminal from evaluating a CPAC candidate cell whose resources have been released, thereby improving the evaluation performance of the terminal on CPAC candidate cells and improving the performance of a communication system.

Optionally, on the basis of the embodiment shown in FIG. 2, the first signaling may be the new Xn signaling or conditional handover cancel signaling, and the first signaling may carry at least one of the following information.
(1) A list of PCells whose configurations are changed, cell identifiers of the PCells, and configuration change content of the PCells, for example, a candidate PCell is added or modified.
   In this example, the list of PCells may be one of the following: a list of cell identifiers of PCells and a list of frequencies and physical cell identifiers (Physical Cell Identifier, PCI) of PCells.
(2) A container (Container) sent by the T-MN to the S-MN, where the container contains a configuration of a target PCell.
(3) A list of primary secondary cells (PSCells) whose configurations are changed, cell identifiers of the PSCells, cell identifiers of PCells associated with the PSCells, and configuration change content of the PSCells, for example, a candidate PSCell is added or modified.
   In this example, the list of PSCells may be one of the following: a list of cell identifiers of the PSCells and a list of frequencies and PCIs of the PSCells.
(4) A container sent by the T-MN to the S-MN, where the container contains a configuration of a target PSCell.
(5) Indication information, where the indication information is used to indicate whether the S-MN needs to inform a source secondary node (S-SN) that the configuration of the CPAC candidate cell is changed.
   In a case that the list of PSCells involved in the configuration of the CPAC candidate cell remains unchanged (for example, only an SCG configuration is changed, but the target cell is not changed) before and after the configuration of the CPAC candidate cell is changed, the T-MN indicates that the S-SN does not need to be informed. Otherwise, the S-SN needs to be informed.
(6) A list of first PSCells, where the list of first PSCells is included in the configuration of the CPAC candidate cell.

The list of first PSCells may be a list of PSCells included in the new configuration of the CPAC candidate cell after the CPAC candidate cell configuration change, for example, a cell ID (cell ID) list or a list of frequencies and PCIs.

If the list of first PSCells is carried by the first signaling, the S-MN may forward the list of first PSCells to the S-SN later. If the list of first PSCells is not carried, the T-MN does not need to inform the S-SN of the change of CHO with CPAC.

(7) A list of second PSCells, where the list of second PSCells is included in the configuration of the CPAC candidate cell, and a trigger condition in the CPAC configuration associated with the second PSCell is related to a measurement configuration of the S-SN.

The list of second PSCells may be a list of specific PSCells included in the new configuration of the CPAC candidate cell after the CPAC candidate cell configuration change, for example, a cell ID (cell ID) list or a list of frequencies and PCIs.

If the list of second PSCells is carried by the first signaling, the S-MN forwards the list of second PSCells to the S-SN later. If the list of second PSCells is not carried, the T-MN does not need to inform the S-SN of the change of CHO with CPAC.

The specific PSCell is a PSCell associated with the CPAC configuration in which a trigger condition is related to the measurement configuration of the S-SN. For example, an operating frequency of the PSCell is equal to one of frequencies to be measured by the S-SN.

It should be noted that the first signaling may typically contain either of the following (that is, not both of them): the list of first PSCells and the list of second PSCells.

Optionally, the first signaling may further carry at least one of the following information: (1) a terminal interface application protocol identifier (UE XnAP ID) allocated by the S-MN for the terminal; and (2) a UE XnAP ID allocated by the T-MN for the terminal.

Optionally, on the basis of the embodiment shown in FIG. 2, the first signaling may be conditional handover cancel signaling, where the first signaling contains a cause value. The first signaling is used to indicate at least one of the following:
(1) a resource of a CPAC candidate cell is changed;
(2) a resource of the CPAC candidate cell is unavailable;
(3) a CPAC candidate cell is added; and
(4) a CHO candidate cell needs to be re-prepared.

In this embodiment, objects indicated by the cause value in the first signaling may all be CPAC candidate cells whose configurations are changed.

In this embodiment, before the S-MN reconfigures CHO with CPAC for the terminal based on the first signaling, the method further includes: sending, by the S-MN, second signaling to the T-MN, where the second signaling is used to re-request a resource of the CHO candidate cell; and receiving, by the S-MN, third signaling from the T-MN, where the third signaling is sent after the T-MN re-requests the resource of the CPAC candidate cell from a T-SN and completes resource preparation for CHO with CPAC. The third signaling may contain the resource of the CHO candidate cell.

In this embodiment, after receiving the first signaling, the S-MN sends the second signaling to the T-MN to re-request a resource of the CHO candidate cell, and the T-MN re-requests the resource of the CPAC candidate cell from the T-SN, completes the resource preparation for CHO with CPAC, and informs the S-MN through the third signaling, so that the S-MN can reconfigure the terminal.

On the basis of the foregoing embodiments, the method further includes: sending, by the S-MN, fourth signaling to the S-SN, where the fourth signaling is used to indicate that the configuration of the CPAC candidate cell is changed.

Optionally, the sending, by the S-MN, fourth signaling to the S-SN includes: in a case that the first signaling carries at least one of the following information, sending, by the S-MN, the fourth signaling to the S-SN: (1) indication information, where the indication information is used to indicate whether the S-MN needs to inform the source secondary node (S-SN) that the configuration of the CPAC candidate cell is changed; (2) the list of first PSCells, where the list of first PSCells is included in the configuration of the CPAC candidate cell; and (3) the list of second PSCells, where the list of second PSCells is included in the configuration of the CPAC candidate cell, and the trigger condition in the CPAC configuration associated with the second PSCell is related to the measurement configuration of the S-SN.

It can be understood that the first signaling received by the S-MN may carry more information, but the fourth signaling sent by the S-MN to the S-SN may contain only one of the following: the list of first PSCells and the list of second PSCells. Based on the fourth signaling, the S-SN can determine a measurement configuration that needs to be deleted. In order to describe in detail the CHO configuration update method provided in this embodiment of this application, the following provides a description with reference to several specific embodiments.

### Embodiment 1

This embodiment introduces a new Xn signaling flow and includes the following steps.
Step 1. A NW configures CHO or CHO with CPAC for a terminal (User Equipment, UE), where the CPAC is associated with the CHO, meaning that a PSCell corresponding to the CPAC is associated with a PCell corresponding to the CHO.
Step 2. A configuration of a target PCell is changed (for example, a target PCell is added or modified) or a configuration of a PSCell associated with a target PCell is changed (for example, a PSCell is added, modified, or released).
Step 3. An NG-RAN node (that is, T-MN) in which the target PCell is located sends first signaling, for example, conditional handover change (Conditional Handover Change) signaling, to an S-MN. The first signaling contains at least one of the following information.
   (1) A UE XnAP ID of a source NG radio access network (NG-RAN) node (S-MN).
   (2) A UE XnAP ID of a target NG-RAN node (T-MN).
   (3) A PCell list whose configurations are changed, cell IDs of the PCells, and configuration change content of the PCells, such as addition or modification.
   (4) A container (Container) sent by the target NG-RAN node to the source NG-RAN node, where the container contains a configuration of the target PCell.
   (5) A PSCell list whose configurations are changed, cell IDs of the PSCells, cell IDs of PCells associated with the PSCells, and configuration change content of the PSCells, such as addition, modification, or release.
   (6) A container sent by the target NG-RAN node to the source NG-RAN node, where the container contains a configuration of the target PSCell.
   (7) Indication information, used to indicate whether the S-SN needs to be informed. In a case that the PSCell list involved in the CPAC configuration remains unchanged (for example, only an SCG configuration is changed, but the target cell is not changed) before and after the change, the T-MN indicates that the S-SN does not need to be informed. Otherwise, the S-SN needs to be informed.
   (8) A list of PSCells included in the new CPAC configuration after the change, for example, a cell ID list or a list of frequencies and PCIs. If the list is carried, the S-MN forwards the list to the S-SN in step 4a. If the list is not carried, the T-MN does not need to inform the S-SN of the change of CHO with CPAC.
   (9) A list of specific PSCells included in the new CPAC configuration after the change, for example, a cell ID list or a list of frequencies and PCIs. If the list is carried, the S-MN forwards the list to the S-SN in step 4a. If the list is not carried, the T-MN does not need to inform the S-SN of the change of CHO with CPAC. The specific PSCell is a PSCell associated with the CPAC configuration in which a trigger condition is related to the measurement configuration of the S-SN. For example, an operating frequency of the PSCell is equal to one of frequencies to be measured by the S-SN.
Step 4. The S-MN reconfigures the UE based on content of the first signaling, and indicates that a candidate PCell is added or modified or a candidate PSCell associated with the candidate PCell is added, modified, or released.
Step 4a. Optionally, if the S-SN exists and the signaling received by the S-MN in step 3 contains the following information, the S-MN inform the S-SN of the CPAC configuration change, and the S-SN may perform related operations, for example, the S-SN deletes measurement configurations for the released CPAC candidate cell.

In this embodiment, the S-MN informs the S-SN if the first signaling contains the following information:
(1) indication information, used to indicate whether the S-SN needs to be informed;
(2) the list of PSCells included in the CPAC configuration, for example, a cell ID list or a list of frequencies and PCIs; and
(3) the list of specific PSCells included in the CPAC configuration, for example, a cell ID list or a list of frequencies and PCIs. If the list is carried, the S-MN forwards the list to the S-SN in step 4a. If the list is not carried, the T-MN does not need to inform the S-SN of the change of CHO with CPAC. The specific PSCell is a PSCell associated with the CPAC configuration in which a trigger condition is related to the measurement configuration of the S-SN. For example, an operating frequency of the PSCell is equal to one of frequencies to be measured by the S-SN.

The sequences of steps 4 and 4a are not limited.

### Embodiment 2

In this embodiment, a new information element (Information Element, IE) is added to conditional handover cancel (Conditional Handover Cancel) signaling. This embodiment includes the following steps.
Step 1. A NW configures CHO or CHO with CPAC for a terminal (UE), where the CPAC is associated with the CHO, meaning that a PSCell corresponding to the CPAC is associated with a PCell corresponding to the CHO.
Step 2. A configuration of a target PCell is changed (for example, a target PCell is added or modified) or a configuration of a PSCell associated with a target PCell is changed (for example, a PSCell is added, modified, or released).
Step 3. An NG-RAN node (that is, T-MN) in which the target PCell is located sends Condition Handover Cancel signaling to an S-MN. The signaling contains a first IE, where the first IE includes at least one of the following child IEs.
   (1) A PSCell list whose configurations are changed, cell IDs of the PSCells, cell IDs of PCells associated with the PSCells, and configuration change content of the PSCells, such as addition, modification, or release.
   (2) A container sent by the target NG-RAN node to the source NG-RAN node, where the container contains a configuration of the target PSCell.
   (3) indication information, used to indicate whether the S-SN needs to be informed; In a case that the PSCell list involved in the CPAC configuration remains unchanged (for example, only an SCG configuration is changed, but the target cell is not changed) before and after the change, the T-MN indicates that the S-SN does not need to be informed. Otherwise, the S-SN needs to be informed.
   (4) A list of PSCells included in the new CPAC configuration after the change, for example, a cell ID list or a list of frequencies and PCIs. If the list is carried, the S-MN forwards the list to the S-SN in step 4a. If the list is not carried, the T-MN does not need to inform the S-SN of the change of CHO with CPAC.
   (5) A list of specific PSCells included in the new CPAC configuration after the change, for example, a cell ID list or a list of frequencies and PCIs. If the list is carried, the S-MN forwards the list to the S-SN in step 4a. If the list is not carried, the T-MN does not need to inform the S-SN of the change of CHO with CPAC. The specific PSCell is a PSCell associated with the CPAC configuration in which a trigger condition is related to the measurement configuration of the S-SN. For example, an operating frequency of the PSCell is equal to one of frequencies to be measured by the S-SN.
Step 4. The S-MN reconfigures the UE based on content of the first signaling, and instructs the UE to add, modify, or release a candidate PSCell associated with the candidate PCell.
Step 4a. Same as step 4a in Embodiment 1.

### Embodiment 3

In this embodiment, a new cause value is added to Conditional Handover Cancel. This embodiment includes the following steps.
Step 1. A NW configures CHO or CHO with CPAC for a terminal (UE), where the CPAC is associated with the CHO, meaning that a PSCell corresponding to the CPAC is associated with a PCell corresponding to the CHO.
Step 2. A configuration of a target PCell is changed (for example, a target PCell is added or modified) or a configuration of a PSCell associated with a target PCell is changed (for example, a PSCell is added, modified, or released).
Step 3. An NG-RAN node (that is, T-MN) in which the target PCell is located releases a candidate PCell, and sends Condition Handover Cancel signaling to an S-MN, where content of a Cause IE is at least one of the following:
   (1) a resource of a CPAC candidate cell is changed;
   (2) a resource of the CPAC candidate cell is unavailable;
   (3) a CPAC candidate cell is added; and
   (4) a CHO candidate cell needs to be re-prepared.
Step 4. After receiving the first signaling sent in step 3, the S-MN re-requests a resource of a CHO candidate cell from the T-MN, and the T-MN re-requests the resource of the CPAC candidate cell from a T-SN. After the T-MN informs the S-MN of the completion of resource preparation for CHO with CPAC, the S-MN reconfigures the UE.
Step 4a. Same as step 4a in Embodiment 1.

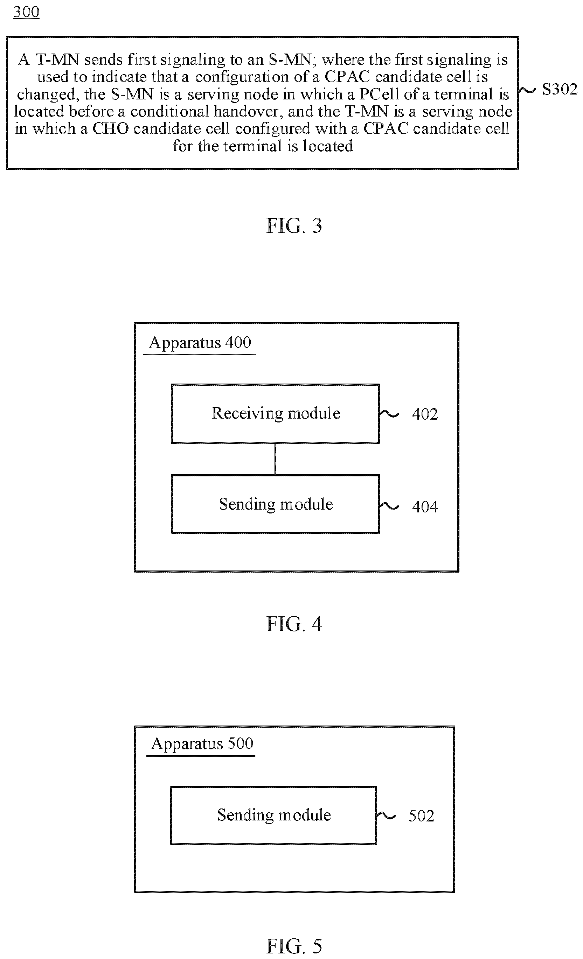

The foregoing describes in detail the CHO configuration update method according to this embodiment of this application, with reference to FIG. 2. The following describes in detail a CHO configuration update method according to another embodiment of this application, with reference to FIG. 3. It can be understood that the interaction between the T-MN and the S-MN described from the T-MN side is the same as or inverse to the description from the S-MN side in the method shown in FIG. 2. To avoid repetition, relevant descriptions are appropriately omitted.

FIG. 3 is a schematic flowchart of a CHO configuration update method according to an embodiment of this application, where the method can be applied to a T-MN. As shown in FIG. 3, a method 300 includes the following step.

S302. A T-MN sends first signaling to an S-MN; where the first signaling is used to indicate that a configuration of a CPAC candidate cell is changed, the S-MN is a serving node in which a PCell of a terminal is located before a conditional handover, and the T-MN is a serving node in which a CHO candidate cell configured with a CPAC candidate cell for the terminal is located.

In this embodiment of this application, in a case that CHO with CPAC is configured for the terminal, if the configuration of the CPAC candidate cell is changed, the T-MN can inform the S-MN through the first signaling, so that the S-MN can reconfigure CHO with CPAC for the terminal based on the first signaling. This prevents the terminal from evaluating a CPAC candidate cell whose resources have been released, thereby improving the evaluation performance of the terminal on CPAC candidate cells and improving the performance of a communication system.

Optionally, in an embodiment, the first signaling carries at least one of the following information: (1) a list of PCells whose configurations are changed, cell identifiers of the PCells, and configuration change content of the PCells; (2) a container sent by the T-MN to the S-MN, where the container contains a configuration of a target PSCell; (3) a list of PSCells whose configurations are changed, cell identifiers of the PSCells, cell identifiers of PCells associated with the PSCells, and configuration change content of the PSCells; (4) a container sent by the T-MN to the S-MN, where the container contains a configuration of a target PCell; (5) indication information, where the indication information is used to indicate whether the S-MN needs to inform an S-SN that the configuration of the CPAC candidate cell is changed; (6) a list of first PSCells, where the list of first PSCells is included in the configuration of the CPAC candidate cell; and (7) a list of second PSCells, where the list of second PSCells is included in the configuration of the CPAC candidate cell, and a trigger condition in the CPAC configuration associated with the second PSCell is related to a measurement configuration of the S-SN.

Optionally, in an embodiment, the first signaling is used to indicate at least one of the following: (1) a resource of a CPAC candidate cell is changed; (2) a resource of the CPAC candidate cell is unavailable; (3) a CPAC candidate cell is added; and (4) a CHO candidate cell needs to be re-prepared.

Optionally, in an embodiment, the method further includes: receiving, by the T-MN, second signaling from the S-MN, where the second signaling is used to re-request a resource of the CHO candidate cell; re-requesting, by the T-MN, a resource of the CPAC candidate cell from a T-SN, and completing resource preparation for CHO with CPAC; and sending, by the T-MN, third signaling to the S-MN, where the third signaling contains the resource of the CHO candidate cell.

Optionally, in an embodiment, the first signaling includes conditional handover cancel signaling.

The CHO configuration update method provided in the embodiments of this application may be executed by a CHO configuration update apparatus. In this embodiment of this application, the CHO configuration update apparatus according to this embodiment of this application is described by using an example in which the CHO configuration update apparatus performs the CHO configuration update method.

FIG. 4 is a schematic structural diagram of a CHO configuration update apparatus according to an embodiment of this application, and the apparatus may correspond to the S-MN in other embodiments. As shown in FIG. 4, an apparatus 400 includes the following modules:
a receiving module 402, configured to receive first signaling from a T-MN; where the first signaling is used to indicate that a configuration of a CPAC candidate cell is changed, the S-MN is a serving node in which a PCell of a terminal is located before a conditional handover, and the T-MN is a serving node in which a CHO candidate cell configured with a CPAC candidate cell for the terminal is located; and
a sending module 404, configured to reconfigure CHO with CPAC for the terminal based on the first signaling.

In this embodiment of this application, in a case that CHO with CPAC is configured for the terminal, if the configuration of the CPAC candidate cell is changed, the S-MN can acquire the configuration change of the CPAC candidate cell through the first signaling, and reconfigure CHO with CPAC for the terminal based on the first signaling. This prevents the terminal from evaluating a CPAC candidate cell whose resources have been released, thereby improving the evaluation performance of the terminal on CPAC candidate cells and improving the performance of a communication system.

Optionally, in an embodiment, the first signaling carries at least one of the following information: (1) a list of PCells whose configurations are changed, cell identifiers of the PCells, and configuration change content of the PCells; (2) a container sent by the T-MN to the S-MN, where the container contains a configuration of a target PSCell; (3) a list of PSCells whose configurations are changed, cell identifiers of the PSCells, cell identifiers of PCells associated with the PSCells, and configuration change content of the PSCells; (4) a container sent by the T-MN to the S-MN, where the container contains a configuration of a target PCell; (5) indication information, where the indication information is used to indicate whether the S-MN needs to inform an S-SN that the configuration of the CPAC candidate cell is changed; (6) a list of first PSCells, where the list of first PSCells is included in the configuration of the CPAC candidate cell; and (7) a list of second PSCells, where the list of second PSCells is included in the configuration of the CPAC candidate cell, and a trigger condition in the CPAC configuration associated with the second PSCell is related to a measurement configuration of the S-SN.

Optionally, in an embodiment, the first signaling is used to indicate at least one of the following: (1) a resource of a CPAC candidate cell is changed; (2) a resource of the CPAC candidate cell is unavailable; (3) a CPAC candidate cell is added; and (4) a CHO candidate cell needs to be re-prepared.

Optionally, in an embodiment, the sending module 404 is further configured to send second signaling to the T-MN, where the second signaling is used to re-request a resource of the CHO candidate cell; and the receiving module 402 is further configured to receive third signaling from the T-MN, where the third signaling is sent after the T-MN re-requests the resource of the CPAC candidate cell from a T-SN and completes resource preparation for CHO with CPAC.

Optionally, in an embodiment, the first signaling includes conditional handover cancel signaling.

Optionally, in an embodiment, the sending module 404 is further configured to send fourth signaling to the S-SN, where the fourth signaling is used to indicate that the configuration of the CPAC candidate cell is changed.

Optionally, in an embodiment, the sending module 404 is configured to send fourth signaling to the S-SN in a case that the first signaling carries at least one of the following information: (1) indication information, where the indication information is used to indicate whether the S-MN needs to inform an S-SN that the configuration of the CPAC candidate cell is changed; (2) a list of first PSCells, where the list of first PSCells is included in the configuration of the CPAC candidate cell; and (3) a list of second PSCells, where the list of second PSCells is included in the configuration of the CPAC candidate cell, and a trigger condition in the CPAC configuration associated with the second PSCell is related to a measurement configuration of the S-SN.

For the apparatus 400 according to this embodiment of this application, reference may be made to the processes of the method 200 in the corresponding embodiment of this application, and the units/modules of the apparatus 400 and other operations and/or functions described above are respectively intended to implement the corresponding processes in the method 200, with the same or equivalent technical effects achieved. For brevity, details are not described herein again.

The CHO configuration update apparatus according to this embodiment of this application may be an electronic device, for example, an electronic device with an operating system, or may be a component in an electronic device, for example, an integrated circuit or a chip. The electronic device may be a terminal or another device except the terminal. For example, the terminal may include but is not limited to a type of the foregoing terminal 11, and another device may be a server, a network attached storage (Network Attached Storage, NAS), or the like, which is not specifically limited in the embodiments of this application.

FIG. 5 is a schematic structural diagram of a CHO configuration update apparatus according to an embodiment of this application, and the apparatus may correspond to the T-MN in other embodiments. As shown in FIG. 5, an apparatus 500 includes the following modules:
a sending module 502, configured to send first signaling to an S-MN; where the first signaling is used to indicate that a configuration of a CPAC candidate cell is changed, the S-MN is a serving node in which a PCell of a terminal is located before a conditional handover, and the T-MN is a serving node in which a CHO candidate cell configured with a CPAC candidate cell for the terminal is located.

Optionally, the apparatus 500 further includes a receiving module, a processor, and the like.

In this embodiment of this application, in a case that CHO with CPAC is configured for the terminal, if the configuration of the CPAC candidate cell is changed, the T-MN can inform the S-MN through the first signaling, so that the S-MN can reconfigure CHO with CPAC for the terminal based on the first signaling. This prevents the terminal from evaluating a CPAC candidate cell whose resources have been released, thereby improving the evaluation performance of the terminal on CPAC candidate cells and improving the performance of a communication system.

Optionally, in an embodiment, the first signaling carries at least one of the following information: (1) a list of PCells whose configurations are changed, cell identifiers of the PCells, and configuration change content of the PCells; (2) a container sent by the T-MN to the S-MN, where the container contains a configuration of a target PSCell; (3) a list of PSCells whose configurations are changed, cell identifiers of the PSCells, cell identifiers of PCells associated with the PSCells, and configuration change content of the PSCells; (4) a container sent by the T-MN to the S-MN, where the container contains a configuration of a target PCell; (5) indication information, where the indication information is used to indicate whether the S-MN needs to inform an S-SN that the configuration of the CPAC candidate cell is changed; (6) a list of first PSCells, where the list of first PSCells is included in the configuration of the CPAC candidate cell; and (7) a list of second PSCells, where the list of second PSCells is included in the configuration of the CPAC candidate cell, and a trigger condition in the CPAC configuration associated with the second PSCell is related to a measurement configuration of the S-SN.

Optionally, in an embodiment, the first signaling is used to indicate at least one of the following: (1) a resource of a CPAC candidate cell is changed; (2) a resource of the CPAC candidate cell is unavailable; (3) a CPAC candidate cell is added; and (4) a CHO candidate cell needs to be re-prepared.

Optionally, in an embodiment, the apparatus further includes a receiving module configured to receive second signaling from the S-MN, where the second signaling is used to re-request a resource of the CHO candidate cell; and the sending module 502 is further configured to: re-request a resource of the CPAC candidate cell from a T-SN and complete resource preparation for CHO with CPAC; and send third signaling to the S-MN, where the third signaling contains the resource of the CHO candidate cell.

Optionally, in an embodiment, the first signaling includes conditional handover cancel signaling.

For the apparatus 500 according to this embodiment of this application, reference may be made to the processes of the method 300 in the corresponding embodiment of this application, and the units/modules of the apparatus 500 and other operations and/or functions described above are respectively intended to implement the corresponding processes in the method 300, with the same or equivalent technical effects achieved. For brevity, details are not described herein again.

The CHO configuration update apparatus provided in this embodiment of this application can implement the processes implemented by the method embodiment illustrated in FIG. 2 and FIG. 3, with the same technical effects achieved. To avoid repetition, details are not described herein again.

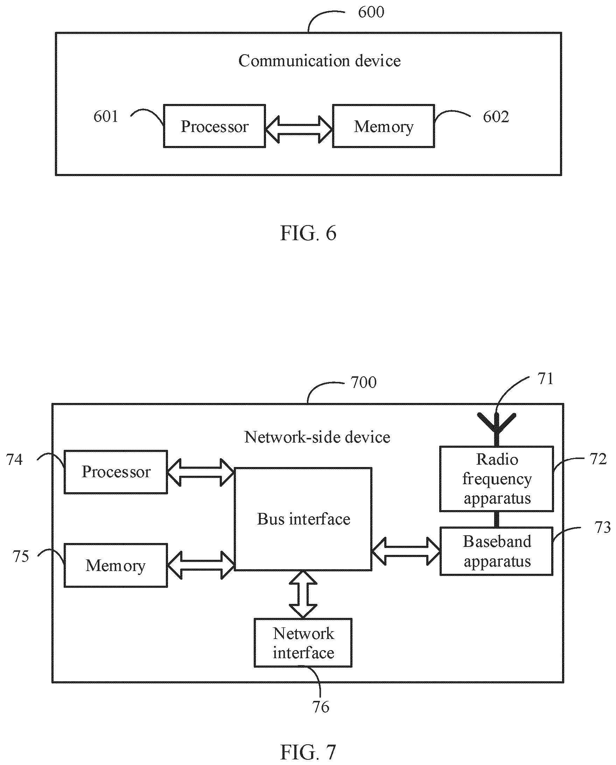

Optionally, as shown in FIG. 6, an embodiment of this application further provides a communication device 600 including a processor 601 and a memory 602, and a program or instructions capable of running on the processor 601 are stored in the memory 602. For example, in a case that the communication device 600 is a network-side device, when the program or instructions are executed by the processor 601, the steps in the foregoing embodiments of the CHO configuration update method are implemented, with the same technical effects achieved. To avoid repetition, details are not described herein again.

An embodiment of this application further provides a network-side device, including a processor and a communication interface. The communication interface is configured to: receive first signaling from a T-MN; where the first signaling is used to indicate that a configuration of a CPAC candidate cell is changed, the S-MN is a serving node in which a PCell of a terminal is located before a conditional handover, and the T-MN is a serving node in which a CHO candidate cell configured with a CPAC candidate cell for the terminal is located; and reconfigure CHO with CPAC for the terminal based on the first signaling. Alternatively, the communication interface is configured to send first signaling to an S-MN; where the first signaling is used to indicate that a configuration of a CPAC candidate cell is changed, the S-MN is a serving node in which a PCell of a terminal is located before a conditional handover, and the T-MN is a serving node in which a CHO candidate cell configured with a CPAC candidate cell for the terminal is located. The network-side device embodiment is corresponding to the foregoing method embodiments applied to the network-side device. All the implementation processes and implementation methods of the foregoing method embodiments can be applied to the network-side device embodiment, with the same technical effects achieved.

Specifically, an embodiment of this application further provides a network-side device. As shown in FIG. 7, the network-side device 700 includes an antenna 71, a radio frequency apparatus 72, a baseband apparatus 73, a processor 74, and a memory 75. The antenna 71 is connected to the radio frequency apparatus 72. In an uplink direction, the radio frequency apparatus 72 receives information by using the antenna 71, and transmits the received information to the baseband apparatus 73 for processing. In a downlink direction, the baseband apparatus 73 processes to-be-transmitted information, and transmits the information to the radio frequency apparatus 72; and the radio frequency apparatus 72 processes the received information and then transmits the information by using the antenna 71.

The method performed by the network-side device in the foregoing embodiment may be implemented in the baseband apparatus 73, and the baseband apparatus 73 includes a baseband processor.

For example, the baseband apparatus 73 may include at least one baseband processing unit, where a plurality of chips are disposed on the baseband processing unit. As shown in FIG. 7, one of the chips is, for example, the baseband processor, and connected to the memory 75, to invoke a program in the memory 75 to perform the operations of the network device shown in the foregoing method embodiment.

The network-side device may further include a network interface 76, where the interface is, for example, a common public radio interface (common public radio interface, CPRI).

Specifically, the network-side device 700 according to the embodiment of the present invention further includes a program or instructions stored in the memory 75 and capable of running on the processor 74. The processor 74 invokes the program or instructions in the memory 75 to implement the method performed by each module shown in FIG. 4 or FIG. 5, with the same technical effects achieved. To avoid repetition, details are not described herein again.

An embodiment of this application further provides a readable storage medium, where a program or instructions are stored in the readable storage medium, and when the program or instructions are executed by a processor, the processes of the foregoing embodiments of the CHO configuration update method are implemented, with the same technical effects achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip, where the chip includes a processor and a communication interface, the communication interface is coupled to the processor, and the processor is configured to run a program or instructions to implement the processes of the foregoing embodiments of the CHO configuration update method, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a storage medium. The computer program/program product is executed by at least one processor to implement the processes of the foregoing embodiments of the CHO configuration update method, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scopes of the method and apparatus in the implementations of this application are not limited to performing functions in the sequence shown or discussed, and may further include performing functions at substantially the same time or in a reverse sequence according to the involved functions. For example, the described method may be performed in a sequence different from the described sequence, and steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A conditional handover CHO configuration update method, comprising:
receiving, by a source master node S-MN, first signaling from a target master node T-MN; wherein the first signaling is used to indicate that a configuration of a conditional primary secondary cell addition or change CPAC candidate cell is changed, the S-MN is a serving node in which a primary cell PCell of a terminal is located before a conditional handover, and the T-MN is a serving node in which a CHO candidate cell configured with a CPAC candidate cell for the terminal is located; and
reconfiguring, by the S-MN, CHO with CPAC for the terminal based on the first signaling.

2. The method according to claim 1, wherein the first signaling carries at least one of the following information:
a list of PCells whose configurations are changed, cell identifiers of the PCells, and configuration change content of the PCells;
a container sent by the T-MN to the S-MN, wherein the container contains a configuration of a target PCell;
a list of primary secondary cells PSCells whose configurations are changed, cell identifiers of the PSCells, cell identifiers of PCells associated with the PSCells, and configuration change content of the PSCells;
a container sent by the T-MN to the S-MN, wherein the container contains a configuration of a target PSCell;
indication information, wherein the indication information is used to indicate whether the S-MN needs to inform a source secondary node S-SN that the configuration of the CPAC candidate cell is changed;
a list of first PSCells, wherein the list of first PSCells is included in the configuration of the CPAC candidate cell; and
a list of second PSCells, wherein the list of second PSCells is included in the configuration of the CPAC candidate cell, and a trigger condition in a CPAC configuration associated with the second PSCell is related to a measurement configuration of the S-SN.

3. The method according to claim 1, wherein the first signaling is used to indicate at least one of the following:
a resource of the CPAC candidate cell is changed;
a resource of the CPAC candidate cell is unavailable;
a CPAC candidate cell is added; and
a CHO candidate cell needs to be re-prepared.

4. The method according to claim 3, wherein before the S-MN reconfigures CHO with CPAC for the terminal based on the first signaling, the method further comprises:
sending, by the S-MN, second signaling to the T-MN, wherein the second signaling is used to re-request a resource of the CHO candidate cell; and
receiving, by the S-MN, third signaling from the T-MN, wherein the third signaling is sent after the T-MN re-requests the resource of the CPAC candidate cell from a T-SN and completes resource preparation for CHO with CPAC.

5. The method according to any one of claims 2 to 4, wherein the first signaling comprises conditional handover cancel signaling.

6. The method according to any one of claims 1 to 4, wherein the method further comprises:
sending, by the S-MN, fourth signaling to the S-SN, wherein the fourth signaling is used to indicate that the configuration of the CPAC candidate cell is changed.

7. The method according to claim 6, wherein the sending, by the S-MN, fourth signaling to the S-SN comprises:
in a case that the first signaling carries at least one of the following information, sending, by the S-MN, the fourth signaling to the S-SN:
indication information, wherein the indication information is used to indicate whether the S-MN needs to inform a source secondary node S-SN that the configuration of the CPAC candidate cell is changed;
the list of first PSCells, wherein the list of first PSCells is included in the configuration of the CPAC candidate cell; and
the list of second PSCells, wherein the list of second PSCells is included in the configuration of the CPAC candidate cell, and the trigger condition in the CPAC configuration associated with the second PSCell is related to the measurement configuration of the S-SN.

8. A CHO configuration update method, comprising:
sending, by a T-MN, first signaling to an S-MN; wherein the first signaling is used to indicate that a configuration of a CPAC candidate cell is changed, the S-MN is a serving node in which a PCell of a terminal is located before a conditional handover, and the T-MN is a serving node in which a CHO candidate cell configured with a CPAC candidate cell for the terminal is located.

9. The method according to claim 8, wherein the first signaling carries at least one of the following information:
a list of PCells whose configurations are changed, cell identifiers of the PCells, and configuration change content of the PCells;
a container sent by the T-MN to the S-MN, wherein the container contains a configuration of a target PCell;
a list of PSCells whose configurations are changed, cell identifiers of the PSCells, cell identifiers of PCells associated with the PSCells, and configuration change content of the PSCells;
a container sent by the T-MN to the S-MN, wherein the container contains a configuration of a target PSCell;
indication information, wherein the indication information is used to indicate whether the S-MN needs to inform an S-SN that the configuration of the CPAC candidate cell is changed;
a list of first PSCells, wherein the list of first PSCells is included in the configuration of the CPAC candidate cell; and
a list of second PSCells, wherein the list of second PSCells is included in the configuration of the CPAC candidate cell, and a trigger condition in a CPAC configuration associated with the second PSCell is related to a measurement configuration of the S-SN.

10. The method according to claim 8, wherein the first signaling is used to indicate at least one of the following:
a resource of the CPAC candidate cell is changed;
a resource of the CPAC candidate cell is unavailable;
a CPAC candidate cell is added; and
a CHO candidate cell needs to be re-prepared.

11. The method according to claim 10, wherein the method further comprises:
receiving, by the T-MN, second signaling from the S-MN, wherein the second signaling is used to re-request a resource of the CHO candidate cell;
re-requesting, by the T-MN, a resource of the CPAC candidate cell from a T-SN, and completing resource preparation for CHO with CPAC; and
sending, by the T-MN, third signaling to the S-MN, wherein the third signaling contains the resource of the CHO candidate cell.

12. The method according to any one of claims 9 to 11, wherein the first signaling comprises conditional handover cancel signaling.

13. A CHO configuration update apparatus applied to an S-MN, comprising:
a receiving module, configured to receive first signaling from a T-MN; wherein the first signaling is used to indicate that a configuration of a CPAC candidate cell is changed, the S-MN is a serving node in which a PCell of a terminal is located before a conditional handover, and the T-MN is a serving node in which a CHO candidate cell configured with a CPAC candidate cell for the terminal is located; and
a sending module, configured to reconfigure CHO with CPAC for the terminal based on the first signaling.

14. The apparatus according to claim 13, wherein the first signaling carries at least one of the following information:
a list of PCells whose configurations are changed, cell identifiers of the PCells, and configuration change content of the PCells;
a container sent by the T-MN to the S-MN, wherein the container contains a configuration of a target PCell;
a list of PSCells whose configurations are changed, cell identifiers of the PSCells, cell identifiers of PCells associated with the PSCells, and configuration change content of the PSCells;
a container sent by the T-MN to the S-MN, wherein the container contains a configuration of a target PSCell;
indication information, wherein the indication information is used to indicate whether the S-MN needs to inform an S-SN that the configuration of the CPAC candidate cell is changed;
a list of first PSCells, wherein the list of first PSCells is included in the configuration of the CPAC candidate cell; and
a list of second PSCells, wherein the list of second PSCells is included in the configuration of the CPAC candidate cell, and a trigger condition in a CPAC configuration associated with the second PSCell is related to a measurement configuration of the S-SN.

15. The apparatus according to claim 13, wherein the first signaling is used to indicate at least one of the following:
a resource of the CPAC candidate cell is changed;
a resource of the CPAC candidate cell is unavailable;
a CPAC candidate cell is added; and
a CHO candidate cell needs to be re-prepared.

16. The apparatus according to claim 15, wherein
the sending module is further configured to send second signaling to the T-MN, wherein the second signaling is used to re-request a resource of the CHO candidate cell; and
the receiving module is further configured to receive third signaling from the T-MN, wherein the third signaling is sent after the T-MN re-requests the resource of the CPAC candidate cell from a T-SN and completes resource preparation for CHO with CPAC.

17. The apparatus according to any one of claims 14 to 16, wherein the first signaling comprises conditional handover cancellation signaling.

18. The apparatus according to any one of claims 13 to 16, wherein the sending module is further configured to send fourth signaling to the S-SN, wherein the fourth signaling is used to indicate that the configuration of the CPAC candidate cell is changed.

19. The apparatus according to claim 18, wherein the sending module is configured to send fourth signaling to the S-SN in a case that the first signaling carries at least one of the following information:
indication information, wherein the indication information is used to indicate whether the S-MN needs to inform an S-SN that the configuration of the CPAC candidate cell is changed;
the list of first PSCells, wherein the list of first PSCells is included in the configuration of the CPAC candidate cell; and
the list of second PSCells, wherein the list of second PSCells is included in the configuration of the CPAC candidate cell, and the trigger condition in the CPAC configuration associated with the second PSCell is related to the measurement configuration of the S-SN.

20. A CHO configuration update apparatus applied to a T-MN, comprising:
a sending module, configured to send first signaling to an S-MN; wherein the first signaling is used to indicate that a configuration of a CPAC candidate cell is changed, the S-MN is a serving node in which a PCell of a terminal is located before a conditional handover, and the T-MN is a serving node in which a CHO candidate cell configured with a CPAC candidate cell for the terminal is located.

21. The apparatus according to claim 20, wherein the first signaling carries at least one of the following information:
a list of PCells whose configurations are changed, cell identifiers of the PCells, and configuration change content of the PCells;
a container sent by the T-MN to the S-MN, wherein the container contains a configuration of a target PCell;
a list of PSCells whose configurations are changed, cell identifiers of the PSCells, cell identifiers of PCells associated with the PSCells, and configuration change content of the PSCells;
a container sent by the T-MN to the S-MN, wherein the container contains a configuration of a target PSCell;
indication information, wherein the indication information is used to indicate whether the S-MN needs to inform an S-SN that the configuration of the CPAC candidate cell is changed;
a list of first PSCells, wherein the list of first PSCells is included in the configuration of the CPAC candidate cell; and
a list of second PSCells, wherein the list of second PSCells is included in the configuration of the CPAC candidate cell, and a trigger condition in a CPAC configuration associated with the second PSCell is related to a measurement configuration of the S-SN.

22. The apparatus according to claim 20, wherein the first signaling is used to indicate at least one of the following:
a resource of the CPAC candidate cell is changed;
a resource of the CPAC candidate cell is unavailable;
a CPAC candidate cell is added; and
a CHO candidate cell needs to be re-prepared.

23. The apparatus according to claim 22, wherein
the apparatus further comprises a receiving module configured to receive second signaling from the S-MN, wherein the second signaling is used to re-request a resource of the CHO candidate cell; and
the sending module is further configured to: re-request a resource of the CPAC candidate cell from a T-SN and complete resource preparation for CHO with CPAC; and send third signaling to the S-MN, wherein the third signaling contains the resource of the CHO candidate cell.

24. The apparatus according to any one of claims 21 to 23, wherein the first signaling comprises conditional handover cancellation signaling.

25. A network-side device, comprising a processor and a memory, wherein a program or instructions capable of running on the processor are stored in the memory, and when the program or instructions are executed by the processor, the steps of the method according to any one of claims 1 to 12 are implemented.

26. A readable storage medium, wherein a program or instructions are stored on the readable storage medium, and when the program or instructions are executed by a processor, the steps of the method according to any one of claims 1 to 12 are implemented.
